# EUROPEAN PATENT SPECIFICATION

(11) **EP 4 496 100 B1**
(45) Date of publication and mention of the grant of the patent: **29.07.2026**
(21) Application number: 23927739.5
(22) Date of filing: 22.12.2023
(51) Int. Cl.: H01M 50/342, H01M 50/358, H01M 50/204

(54) **BATTERY PACK FOR RELIEVING INTERNAL PRESSURE DURING THERMAL RUNAWAY**
BATTERIEPACK ZUR FREIGABE VON INNENDRUCK BEIM THERMISCHEN DURCHGEHEN
BLOC-BATTERIE POUR LIBÉRER UNE PRESSION INTERNE PENDANT UN EMBALLEMENT THERMIQUE

(30) Priority: 14.03.2023 KR 20230033446
(43) Date of publication of application: 22.01.2025
(73) Proprietor: LG Energy Solution, Ltd., Seoul 07335 (KR)
(72) Inventor: KIM, Haejin, Daejeon 34122 (KR); LEE, Jaesung, Daejeon 34122 (KR); HONG, Sein, Daejeon 34122 (KR); SIN, Jehwan, Daejeon 34122 (KR)
(74) Representative: Plasseraud IP
(86) International application number: PCT/KR2023/021414
(87) International publication number: WO 2024/191019

(56) References cited:
- KR-A- 20080 037 862
- KR-A- 20170 031 567
- KR-A- 20190 059 076
- KR-A- 20220 077 517
- KR-A- 20220 163 202
- KR-A- 20220 169 705
- KR-B1- 102 322 910
- US-A1- 2015 364 736
- US-A1- 2016 372 726

## Description

### TECHNICAL FIELD

The present disclosure relates to a battery pack, and more particularly, to a battery pack capable of effectively relieving internal pressure during thermal runaway.

### BACKGROUND

Unlike primary batteries which cannot be recharged, secondary batteries refer to batteries that can be charged and discharged, and are used not only in portable devices but also in electric vehicles (EVs) and hybrid electric vehicles (HEVs) that are driven by an electrical drive source.

Types of secondary batteries currently widely used include lithium ion batteries, lithium polymer batteries, nickel cadmium batteries, nickel hydrogen batteries, and nickel zinc batteries. The operating voltage of a unit secondary battery cell, that is, a unit battery cell, is approximately 2.5V to 4.6V. Therefore, when a higher output voltage is required, a battery pack is formed by connecting multiple battery cells in series. In addition, a battery pack may also be formed by connecting multiple battery cells in parallel depending on the charge/discharge capacity required for the battery pack. Accordingly, the number of battery cells included in the battery pack may be set in various ways depending on the required output voltage or charge/discharge capacity.

When forming a battery pack by connecting a plurality of battery cells in series/parallel, it is common to first configure a battery module comprising at least one battery cell, preferably a plurality of battery cells, and to form the battery pack by using at least one such battery module and adding other components. In this case, the battery module refers to a component in which multiple battery cells are connected in series or parallel, and the battery pack refers to a component in which multiple battery modules are connected in series or parallel to increase capacity and output.

Typically, a vehicle battery pack has a plurality of battery modules or battery module assemblies arranged on the same plane to maintain structural stability.

However, in such a battery pack, in the event of an overcharge or the like, high energy may flow instantaneously, and the chemical activation of the anode material may be greatly increased due to the overcharge or short circuit, so the anode material may rapidly react with the electrolyte to generate a large amount of gas. As a result, the pressure or temperature inside the battery pack may rise rapidly, which may lead to an explosion of the battery pack.

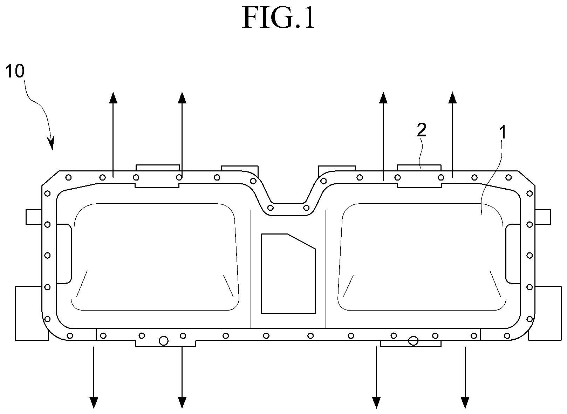

As shown in FIG. 1, in a conventional battery pack 10, gas leaks through a rubber sealing gasket between an upper housing 1 and a lower housing 2 during thermal runaway, but in this case, the gas cannot be discharged quickly and may cause external housing deformation and sealing damage, which may result in flames occurring outside of the battery pack.

The background description provided herein is for the purpose of generally presenting context of the disclosure. Unless otherwise indicated herein, the materials described in this section are not prior art to the claims in this application and are not admitted to be prior art, or suggestions of the prior art, by inclusion in this section.

An example of a pack case comprising a vent structure can be found in KR 2017-0031567 A. An example of a battery pack comprising a filtering device can be found in US 2016/372726 A1. An example of an electric storage device comprising a gas exhausting portion with a safety valve can be found in US 2015/364736 A1.

### SUMMARY

The present disclosure provides a battery pack capable of quickly relieving internal pressure during thermal runaway.

A battery pack capable of relieving internal pressure during thermal runaway, in accordance with one embodiment of the present disclosure, is defined in claim 1.

Further, the case may further include: a lower housing; and an upper housing coupled to athe lower housing.

Further, preferably, the vent hole is formed at the upper housing.

Further, the vent hole may be formed in plural.

Further, the perforated line may be formed in a circular shape.

Further, the perforated line may be formed in an arc shape.

A battery pack capable of relieving internal pressure during thermal runaway, in accordance with another embodiment of the present disclosure, is defined in claim 7.

Further, the perforated line may be disposed at an outer side of an inner peripheral surface of the gas discharge tube at the expansion part.

The battery pack according to the present disclosure may quickly relieve internal pressure during thermal runaway.

### BRIEF DESCRIPTION OF THE DRAWINGS

FIG. 1 is a diagram showing a conventional battery pack.
FIG. 2 is a diagram showing a battery pack according to a first embodiment of the present disclosure.
FIG. 3 is a detailed view of part A in FIG. 2.
FIG. 4 is a diagram showing a cross-section of one side of the battery pack in FIG. 2.
FIG. 5 is an enlarged view of a venting tape in a battery pack for relieving internal pressure during thermal runaway according to a second embodiment of the present disclosure.
FIGS. 6 and 7 are enlarged views of a venting tape in a battery pack for relieving internal pressure during thermal runaway according to a third embodiment of the present disclosure.
FIG. 8 is a diagram showing the internal gas being discharged through a vent hole in FIG. 6.
FIG. 9 is a diagram showing the internal gas being discharged through the vent hole in FIG. 7.
FIGS. 10 and 11 are diagrams showing a battery pack according to a fourth embodiment of the present disclosure.

### DETAILED DESCRIPTION

The advantages and features of the present disclosure and methods for achieving them will become apparent by referring to the embodiments described in detail below along with the accompanying drawings. However, the present disclosure is not limited to the embodiments disclosed below and can be implemented in various different forms. The present embodiments are provided merely to make the disclosure of the present disclosure complete and to fully inform a person of ordinary skill in the art to which the present disclosure pertains of the scope of the present disclosure, and the present disclosure may be defined by the scope of the claims. It should be noted that, in some embodiments, well-known process steps, well-known device structures, and well-known techniques may not be specifically described to avoid ambiguous interpretation of the present disclosure. Like reference numerals may refer to like components throughout the specification.

In the drawings, in order to clearly represent multiple layers and areas, the thickness thereof may be shown to scale. Throughout the specification, like parts may be given the same reference numerals. When it is described that a part such as a layer, membrane, region, plate, etc. is "on" another part, this includes not only a case where the part is "directly on" the another part, but also a case where there is other part between them. Conversely, when it is described that a part is "directly on" another part, it means that there is no other part between them. In addition, when it is described that a part such as a layer, membrane, region, plate, etc. is "under" another part, this includes not only a case where the part is "directly under" the another part, but also a case where there is other part between them. Conversely, when it is described that a part is "directly under" another part, it means that there is no other part between them.

Hereinafter, a battery pack for relieving internal pressure during thermal runaway according to a preferred embodiment of the present disclosure will be described in detail with reference to the accompanying drawings.

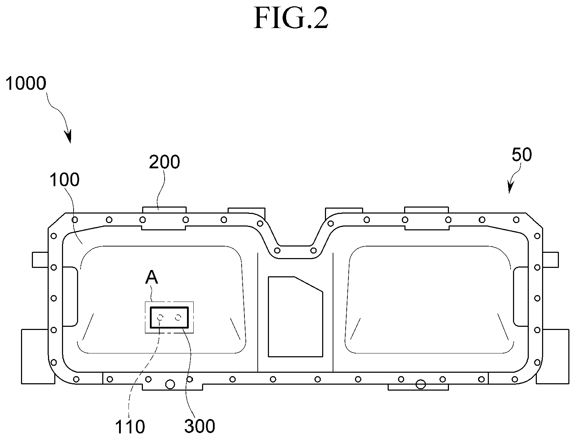

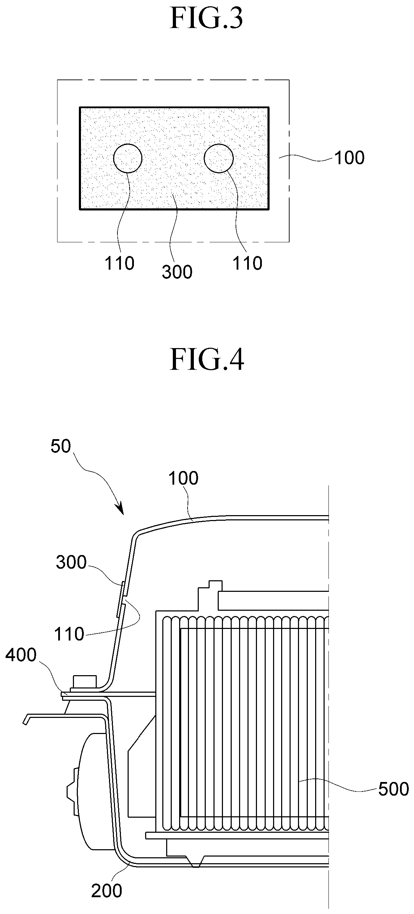

FIG. 2 is a diagram showing a battery pack according to one embodiment of the present disclosure, FIG. 3 is a diagram showing a detailed view of part A in FIG. 2, and FIG. 4 is a diagram showing a cross-section of one side of the battery pack in FIG. 2.

A battery pack 1000 for relieving internal pressure during thermal runaway according to one embodiment of the present disclosure includes at least one battery module 500 and a case 50 housing the battery module 500, and the case 50 includes an upper housing 100 and a lower housing 200.

The battery module 500 accommodated in the battery pack 1000 includes a plurality of battery cells (not shown), and each battery cell may be, for example, a pouch-type battery cell. As an example, the battery module 500 may include a plurality of battery cells stacked on top of each other, and each battery cell may be provided with an electrode lead at each of front and rear ends, with a positive lead at the front end and a negative lead at the rear end. The plurality of battery cells in the battery module 500 may be stacked to be electrically connected to each other.

The battery cell is not limited to the pouch-type battery cell and may be other types of battery cells, such as a prismatic battery cell, and the plurality of battery cells may be accommodated in the case of the battery module 500.

The case 50 is for housing a plurality of battery modules 500, and the case 50 may include an upper housing 100 and a lower housing 200, and may further include a gasket 400 provided between the upper and lower housings 100 and 200.

The plurality of battery modules 500 may be accommodated in the lower housing 200, and the upper housing 100 is coupled to an upper side of the lower housing 200 to form an internal space for accommodating the battery modules 500 inside the case 50.

The gasket 400 disposed between the upper housing 100 and the lower housing 200 is for sealing between the upper housing 100 and the lower housing 200, and the gasket 400 may be disposed across the entire portion where the upper and lower housings 100 and 200 are joined and may be in the form of a closed loop on a plane. The material of the gasket may be rubber or other materials.

Meanwhile, in the present disclosure, a vent hole 110 is formed in the case 50. The vent hole 110 is for venting gas generated inside the battery pack 1000 during thermal runaway. FIGS. 2 and 3 show an example in which the vent hole 110 is formed in the upper housing 100.

In a battery pack, in the event of an overcharge, high energy may flow instantaneously, and anode material may rapidly react with electrolyte to generate a large amount of gas because its chemical activation is greatly increased by the overcharge or short circuit. As a result, the pressure or temperature inside the battery pack may rise rapidly, which may lead to an explosion of the battery pack.

In the present disclosure, during thermal runaway of the battery pack 1000, gas generated inside the battery pack 1000 is discharged through the vent hole 110, thereby preventing external housing deformation and sealing damage of the gasket due to an increase in internal pressure. FIGS. 2 and 3 show an example in which the vent hole 110 is formed in the upper housing 100, but the vent hole 110 may be formed in the lower housing 200.

FIGS. 2 and 3 show two vent holes 110, however one or more than two vent holes 110 may be formed in the case 50.

Further, a venting tape 300 is attached on top of the vent hole 110. The venting tape 300 is attached to the case 50 or the upper housing 100 to cover the vent hole 110. The venting tape 300 has a larger area than the vent hole 110 and is attached to the case 50 or the upper housing 100 through an adhesive applied to a back side thereof.

The venting tape 300 normally seals the interior of the case 50 from the outside and prevents foreign substances from entering, and during thermal runaway of the battery pack, when a certain pressure is generated due to an increase in the internal pressure of the battery pack 1000, the venting tape 300 may separate from the case 50 or the upper housing 100 due to loss of adhesion, so that the internal gas is discharged through the vent hole 110.

In a conventional battery pack, during thermal runaway of the battery pack, gas leaks through the gasket between the upper housing and the lower housing, which does not allow the gas to be discharged quickly, causing external housing deformation and sealing damage of the gasket. However, in the present disclosure, during thermal runaway of the battery pack, when the internal pressure rises due to gas generated inside the battery pack 1000, the venting tape 300 may separate from the case 50 or the upper housing 100 at a certain pressure or above, so that the internal gas is discharged through the vent hole 110, and the internal pressure may be quickly relieved, and flames may be prevented from occurring outside of the battery pack by relieving the internal pressure in the initial stage of the thermal runaway.

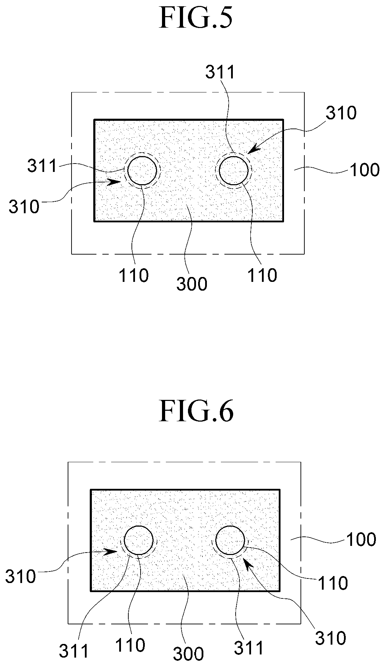

Next, a battery pack capable of relieving internal pressure during thermal runaway according to a second embodiment of the present disclosure will be described. FIG. 5 is an enlarged view of a venting tape in the battery pack for relieving internal pressure during thermal runaway according to the second embodiment of the present disclosure.

The difference between the second embodiment and the first embodiment is that a perforated line 310 is formed on the venting tape 300.

In the present embodiment, the perforated line 310 is formed in a circular shape and is formed to surround the vent hole 110 on the outer side of the vent hole 110 in the venting tape 300. A diameter of the perforated line 310 may be equal to or larger than a diameter of the vent hole 110.

Specifically, the perforated line 310 includes a plurality of perforated holes 311 spaced apart from each other as shown, and each perforated hole 311 has an arc shape forming part of a circle. Accordingly, all the perforated holes 311 together form a circle.

In the second embodiment of the present disclosure, the interior of the case 50 is normally sealed from the outside to prevent foreign substances from entering, and when the internal pressure increases due to gas generated inside the battery pack 1000 during thermal runaway of the battery pack, part or all of the perforated line 310 cuts from the venting tape 300 at a certain pressure or above, and the venting tape 300 may separate from the case 50 or the upper housing 100, so that the internal gas is discharged through the vent hole 110 and the cut portion of the perforated line to relieve the internal pressure.

In addition, in the second embodiment of the present disclosure, a discharge pressure of the discharged gas may be adjusted by adjusting a width of each perforated hole 311 constituting the perforated line 310 and a gap between the perforated holes 311.

Specifically, a standard pressure at which the discharged gas is discharged may be increased by increasing the gap between the perforated holes 311, and the standard pressure at which the discharged gas is discharged may be reduced by reducing the gap between the perforated holes 311.

Further, the standard pressure at which the discharged gas is discharged may be reduced by increasing the width of the perforated hole 311, and the standard pressure at which the discharged gas is discharged may be increased by reducing the width of the perforated hole 311.

Other configurations and effects may be the same as those of the first embodiment, and detailed description thereof will be omitted herein.

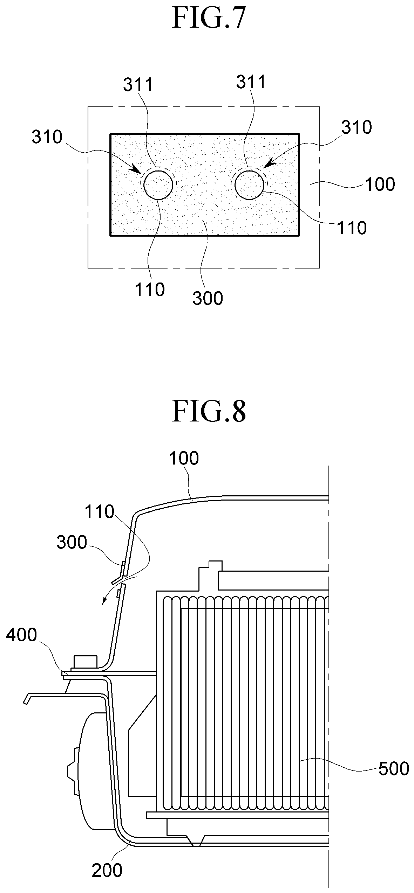

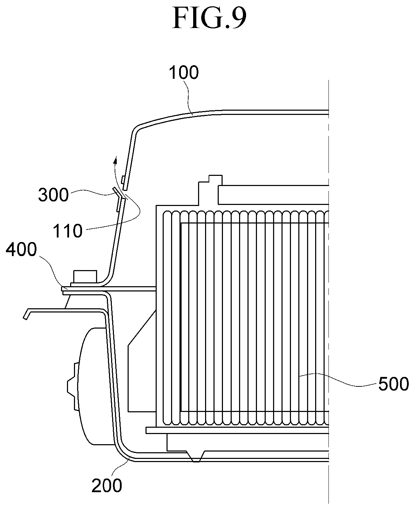

Next, a battery pack for relieving internal pressure during thermal runaway according to a third embodiment of the present disclosure will be described. FIGS. 6 and 7 are enlarged views of a venting tape in the battery pack for relieving internal pressure during thermal runaway according to the third embodiment of the present disclosure, FIG. 8 is a diagram showing the internal gas being discharged through the vent hole shown in FIG. 6, and FIG. 9 is a diagram showing the internal gas being discharged through the vent hole shown in FIG. 7.

The difference between the third embodiment and the second embodiment is that the perforated line 310 of the venting tape 300 is formed in an arc shape.

In the third embodiment, unlike the second embodiment, the perforated line 310 is formed in the shape of an arc instead of a circle, and FIGS. 6 and 7 show examples in which the perforated line 310 is in a semicircular shape.

FIG. 6 shows an example in which the perforated line 310 is disposed on the lower side of the vent hole 110, and FIG. 7 shows an example in which the perforated line 310 is disposed on the upper side of the vent hole 110.

In the third embodiment, when the internal pressure increases due to gas generated inside the battery pack 1000 during thermal runaway, a portion of the perforated line 310 in the venting tape 300 is cut at a certain pressure or above, and when the perforated line 310 is disposed on the lower side of the vent hole 110 as shown in FIG. 6, the gas passing through the vent hole 110 is discharged downward (see FIG. 8). When the perforated line 310 is disposed on the upper side of the vent hole 110 as shown in FIG. 7, the gas passing through the vent hole 110 is discharged upward (see FIG. 9).

Accordingly, in the third embodiment of the present disclosure, by forming the perforated line 310 in the arc shape and changing the formation position of the perforated line 310, the discharge direction of the discharged gas may be adjusted. It should be noted that the perforated line 310 may be disposed on the left or right side of the vent hole 110. When there are two vent holes 110 as shown, the perforated line 310 for the left vent hole 110 is disposed on the left (or right) side of the vent hole 110 and the perforated line 310 for the right vent hole 110 may be disposed on the right (or left) side of the vent hole 110.

In addition, in FIGS. 6 and 7, the perforated line is shown in the form of a semicircle, but it may be in the form of an arc that is smaller or larger than the semicircle.

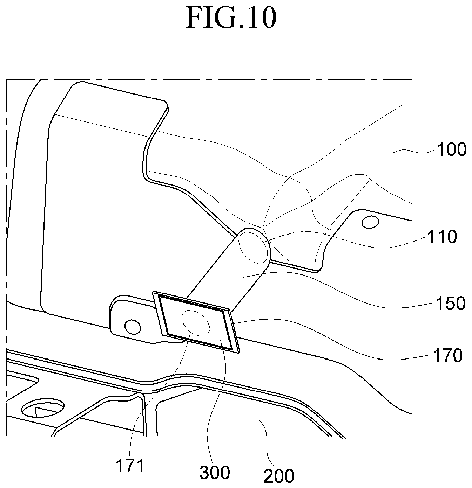

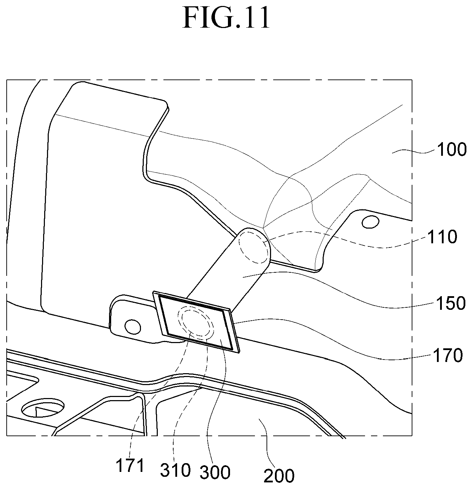

Next, a battery pack for relieving internal pressure during thermal runaway according to a fourth embodiment of the present disclosure will be described. FIGS. 10 and 11 are diagrams showing the battery pack according to the fourth embodiment of the present disclosure.

The difference between the fourth embodiment and the previous embodiments is that a gas discharge tube 150 is provided in communication with the vent hole 110, and the venting tape 300 is disposed to cover an end of the gas discharge tube 150.

Specifically, the gas discharge tube 150 is connected to the vent hole 110 on the case 50 or the upper housing 100 and extends outward for a certain length, and one end of the gas discharge tube 150 is connected to the vent hole 110 while the other end of the gas discharge tube 150 is disposed to protrude outward by the certain length, and an expansion part 170 is disposed at the other end.

In the present embodiment, the expansion part 170 is formed in the form of a flat plate and is disposed at the other end of the gas discharge tube 150 to extend outward from an outer peripheral surface of the gas discharge tube 150.

A communication hole 171 that communicates with the gas discharge tube 150 is formed in the center of the expansion part 170. A diameter of the communication hole 171 may be the same as or larger than an inner diameter of the gas discharge tube 150.

The venting tape 300 is attached to the expansion part 170. The venting tape 300 is disposed on the expansion part 170 to cover the end of the gas discharge tube 150 and the communication hole 171.

In the fourth embodiment, when the internal pressure increases due to the gas generated inside the battery pack 1000 during thermal runaway of the battery pack, the gas may be guided to the gas discharge tube 150 through the vent hole 110, and the gas may apply pressure to the venting tape 300 disposed on the other end of the gas discharge tube 150 and the expansion part 170 so that the venting tape 300 separates and the gas is discharged to the outside to relieve internal pressure.

In the present embodiment, the gas discharge tube 150 may be coupled to extend in up, down, left,or right directions from the case 50 or the upper housing 100, and the gas discharge tube 150 may extend in a straight line, or may have a bent portion that is bent in one direction, or may be formed to be bent in one direction.

As such, in the fourth embodiment, the internal gas may be guided and discharged through the gas discharge tube 150 connected to the vent hole 110, and the discharge direction of the gas may be adjusted by adjusting the direction in which the gas discharge tube 150 extends from the case 50 or the upper housing 100.

In addition, in the fourth embodiment, the venting tape 300 may further include the perforated lines 310 as in the second and third embodiments (see FIG. 11).

In this case, the perforated line 310 may be disposed on the outer side of the inner peripheral surface of the gas discharge tube 150 in the expansion part 170, and the perforated line 310 may be disposed to surround an inner circumference (the cross-sectional hole of movement passage or the communication hole 171) of the gas discharge tube 150 in the expansion part 170. Further, the perforated line 310 may have a circular or arc shape as in the second embodiment and the third embodiment.

### (Industrial Applicability)

The present disclosure may provide a battery pack capable of quickly relieving internal pressure during thermal runaway.

## Claims

1. A battery pack (1000) capable of relieving internal pressure during thermal runaway, comprising:
at least one battery module (500); and
a case (50) housing the battery module (500),
wherein the case (50) includes:
a vent hole (110) to discharge gas from an inside of the case (50); and
a venting tape (300) disposed at the case (50) to cover the vent hole (110),
**characterized in that** the venting tape (300) includes a perforated line (310) disposed at an outer side of the vent hole (110) and formed to surround the vent hole (110).

2. The battery pack (1000) of claim 1, wherein the case (50) includes:
a lower housing (200); and
an upper housing (100) coupled to the lower housing (200).

3. The battery pack (1000) of claim 2, wherein the vent hole (110) is formed at the upper housing (100).

4. The battery pack (1000) of claim 3, wherein the vent hole (110) is formed in plural.

5. The battery pack (1000) of claim 1, wherein the perforated line (310) is formed in a circular shape.

6. The battery pack (1000) of claim 1, wherein the perforated line (310) is formed in an arc shape.

7. A battery pack (1000) capable of relieving internal pressure during thermal runaway, comprising:
at least one battery module (500); and
a case (50) housing the battery module (500),
wherein the case (50) includes:
a vent hole (110) to discharge gas from an inside of the case (50);
a gas discharge tube (150) communicating with the vent hole (110) and extending outward from the case (50); and
a venting tape (300) disposed at an end of the gas discharge tube (150),
**characterized in that** the battery pack (1000) comprises an expansion part (170) disposed at the end of the gas discharge tube (150) and extending outward from the end of the gas discharge tube (150), wherein the venting tape (300) is disposed at the expansion part (170), and
wherein the venting tape (300) includes a perforated line (310) formed to surround an inner circumference of the gas discharge tube (150).

8. The battery pack (1000) of claim 7, wherein the perforated line (310) is disposed at an outer side of an inner peripheral surface of the gas discharge tube (150) at the expansion part (170).

9. The battery pack (1000) of claim 7, wherein the perforated line (310) is formed in a circular shape.

10. The battery pack (1000) of claim 7, wherein the perforated line (310) is formed in an arc shape.

## Patentansprüche

1. Batteriepack (1000), das in der Lage ist, den Innendruck während eines thermischen Durchgehens abzubauen, umfassend:
mindestens ein Batteriemodul (500); und
einen Behälter (50), der das Batteriemodul (500) aufnimmt,
wobei der Behälter (50) Folgendes enthält:
ein Entlüftungsloch (110) zum Ablassen von Gas aus dem Inneren des Behälters (50); und
ein Entlüftungsband (300), das am Behälter (50) angeordnet ist, um das Entlüftungsloch (110) abzudecken,
**dadurch gekennzeichnet, dass** das Entlüftungsband (300) eine perforierte Linie (310) enthält, die an einer Außenseite des Entlüftungslochs (110) angeordnet und so ausgebildet ist, dass sie das Entlüftungsloch (110) umgibt.

2. Batteriepack (1000) nach Anspruch 1, wobei der Behälter (50) Folgendes enthält:
ein unteres Gehäuse (200); und
ein oberes Gehäuse (100), das mit dem unteren Gehäuse (200) gekoppelt ist.

3. Batteriepack (1000) nach Anspruch 2, wobei das Entlüftungsloch (110) am oberen Gehäuse (100) ausgebildet ist.

4. Batteriepack (1000) nach Anspruch 3, wobei das Entlüftungsloch (110) mehrfach ausgebildet ist.

5. Batteriepack (1000) nach Anspruch 1, wobei die perforierte Linie (310) in einer kreisförmigen Form ausgebildet ist.

6. Batteriepack (1000) nach Anspruch 1, wobei die perforierte Linie (310) in einer Bogenform ausgebildet ist.

7. Batteriepack (1000), das in der Lage ist, den Innendruck während eines thermischen Durchgehens abzubauen, umfassend:
mindestens ein Batteriemodul (500); und
einen Behälter (50), der das Batteriemodul (500) aufnimmt,
wobei der Behälter (50) Folgendes enthält:
ein Entlüftungsloch (110) zum Ablassen von Gas aus dem Inneren des Behälters (50);
ein Gasablassrohr (150), das mit dem Entlüftungsloch (110) in Verbindung steht und sich vom Behälter (50) nach außen erstreckt; und
ein Entlüftungsband (300), das an einem Ende des Gasablassrohrs (150) angeordnet ist,
**dadurch gekennzeichnet, dass** das Batteriepack (1000) ein Erweiterungsteil (170) umfasst, das am Ende des Gasablassrohrs (150) angeordnet ist und sich vom Ende des Gasablassrohrs (150) nach außen erstreckt, wobei das Entlüftungsband (300) am Erweiterungsteil (170) angeordnet ist, und
wobei das Entlüftungsband (300) eine perforierte Linie (310) enthält, die so ausgebildet ist, dass sie einen Innenumfang des Gasablassrohrs (150) umgibt.

8. Batteriepack (1000) nach Anspruch 7, wobei die perforierte Linie (310) an einer Außenseite einer inneren Umfangsfläche des Gasablassrohrs (150) am Erweiterungsteil (170) angeordnet ist.

9. Batteriepack (1000) nach Anspruch 7, wobei die perforierte Linie (310) in einer kreisförmigen Form ausgebildet ist.

10. Batteriepack (1000) nach Anspruch 7, wobei die perforierte Linie (310) in einer Bogenform ausgebildet ist.

## Revendications

1. Bloc-batterie (1000) capable de libérer une pression interne pendant un emballement thermique, comprenant :
au moins un module de batterie (500) ; et
un boîtier (50) logeant le module de batterie (500),
dans lequel le boîtier (50) inclut :
un trou d'évent (110) pour évacuer du gaz depuis l'intérieur du boîtier (50) ; et
un ruban d'évent (300) disposé au niveau du boîtier (50) pour couvrir le trou d'évent (110),
**caractérisé en ce que** le ruban d'évent (300) inclut une ligne perforée (310) disposée sur un côté extérieur du trou d'évent (110) et formée pour entourer le trou d'évent (110).

2. Bloc-batterie (1000) selon la revendication 1, dans lequel le boîtier (50) inclut :
un boîtier inférieur (200) ; et
un boîtier supérieur (100) couplé au boîtier inférieur (200).

3. Bloc-batterie (1000) selon la revendication 2, dans lequel le trou d'évent (110) est formé au niveau du boîtier supérieur (100).

4. Bloc-batterie (1000) selon la revendication 3, dans lequel le trou d'évent (110) est formé en plusieurs exemplaires.

5. Bloc-batterie (1000) selon la revendication 1, dans lequel la ligne perforée (310) est formée selon une forme circulaire.

6. Bloc-batterie (1000) selon la revendication 1, dans lequel la ligne perforée (310) est formée selon une forme d'arc.

7. Bloc-batterie (1000) capable de libérer une pression interne pendant un emballement thermique, comprenant :
au moins un module de batterie (500) ; et
un boîtier (50) logeant le module de batterie (500),
dans lequel le boîtier (50) inclut :
un trou d'évent (110) pour évacuer du gaz depuis l'intérieur du boîtier (50) ;
un tube d'évacuation de gaz (150) communiquant avec le trou d'évent (110) et s'étendant vers l'extérieur depuis le boîtier (50) ; et
un ruban d'évent (300) disposé à une extrémité du tube d'évacuation de gaz (150),
**caractérisé en ce que** le bloc-batterie (1000) comprend une partie d'expansion (170) disposée à l'extrémité du tube d'évacuation de gaz (150) et s'étendant vers l'extérieur depuis l'extrémité du tube d'évacuation de gaz (150), dans lequel le ruban d'évent (300) est disposé au niveau de la partie d'expansion (170), et
dans lequel le ruban d'évent (300) inclut une ligne perforée (310) formée pour entourer une circonférence intérieure du tube d'évacuation de gaz (150).

8. Bloc-batterie (1000) selon la revendication 7, dans lequel la ligne perforée (310) est disposée sur un côté extérieur d'une surface périphérique intérieure du tube d'évacuation de gaz (150) au niveau de la partie d'expansion (170).

9. Bloc-batterie (1000) selon la revendication 7, dans lequel la ligne perforée (310) est formée selon une forme circulaire.

10. Bloc-batterie (1000) selon la revendication 7, dans lequel la ligne perforée (310) est formée selon une forme d'arc.
